# EUROPEAN PATENT SPECIFICATION

(11) **EP 3 155 307 B1**
(45) Date of publication and mention of the grant of the patent: **01.04.2020**
(21) Application number: 15731633.2
(22) Date of filing: 08.06.2015
(51) Int. Cl.: B29C 65/34, B29C 65/50, B29C 65/78, F16L 47/03, B29L 23/00

(54) **A DEVICE FOR CONNECTING PLASTIC PIPES AS WELL AS A METHOD FOR THE ARRANGEMENT OF A WELDING RING IN A GROOVE OF A PLASTIC PIPE**
VORRICHTUNG ZUR VERBINDUNG VON KUNSTSTOFFROHREN SOWIE VERFAHREN ZUR EINBRINGUNG VON EINEM SCHWEISSRING IN EINE NUT EINES KUNSTSTOFFROHRS
DISPOSITIF POUR RELIER DES TUYAUX EN PLASTIQUE, AINSI QUE PROCÉDÉ POUR LA MISE EN PLACE D'UN ANNEAU DE SOUDAGE DANS UNE RAINURE D'UN TUYAU EN PLASTIQUE

(30) Priority: 11.06.2014 DE 102014008231; 11.06.2014 DE 202014004671 U
(43) Date of publication of application: 19.04.2017
(73) Proprietor: Bellapipe Oy, 43500 Karstula (FI)
(72) Inventor: RAUTIAINEN, Ville, FI-43500 Karstula (FI); HELLSTÉN, Ari, FI-43500 Karstula (FI)
(74) Representative: Berggren Oy, Helsinki & Oulu
(86) International application number: PCT/FI2015/050390
(87) International publication number: WO 2015/189465

(56) References cited:
- EP-A1- 0 584 381
- EP-A2- 1 201 403
- WO-A1-87/07935
- DE-A1- 2 854 618
- JP-A- H0 550 507
- US-A- 2 977 994
- US-A- 3 422 179

## Description

The invention relates firstly to a device for connecting plastic pipes, consisting substantially of a welding ring having an inner extension hose with a cavity, a resistance wire being preferably wound spirally around the extension hose and being, in turn, enclosed by a plastic sheath which provides a firmly bonded joint of the abutting plastic pipes after melting.

From the state of art, of which no printed documents are presented, devices are known which are used for connecting sewage pipes of polypropylene (PP), the connection being permanently sealed, root resistant, resistant to tensile strength, and of friction type, the pipes being used for municipal and domestic drainage, industry and landfill construction. Such devices, also briefly known as welding rings, are inserted in the beads provided in the fittings of the pipes for receiving a rubber seal. For this purpose, the rubber seal is first removed and the welding ring is then inserted in the bead. However, because the bead arranged in the fitting as well as the welding ring have a larger diameter than the smallest diameter of the fitting, it is relatively problematic to insert the oversize welding ring into the fitting without damaging the welding ring, particularly in the area of the connecting wires, and to run the connecting wires neatly and in parallel out of the fitting.

In publication DE 2854618 A1 is disclosed a system for joining together by heat-welding two tubular elements of thermoplastic material and of mutually different diameters, subsequent to inserting one end of one said element into one end of the other to leave an annular gap therebetween, which system comprises a ring-shaped welding sleeve which is located in said gap and which is made of a meltable thermoplastic material, a recoverably deformed pressure-generating ring-shaped body made of a heat-recoverable plastic material inserted within the welding sleeve, and heat-generating means arranged to cooperate with said ring-shaped body in a manner such as to heat the same and to bring the welding sleeve and said mutually opposing wall surfaces to a fusible state.

In publication WO 87/07935 A1 is disclosed a method of joining first and second double-walled tubes, each having a mating end and a corrugated outer wall forming corrugation ribs and an inner wall joined to said outer wall between said ribs, both walls being made of a fusible plastic material, the outer wall of each tube having a diameter larger than the inner wall of the other tube, comprising the steps of: cutting each tube through a corrugation rib at the tube mating end to open an annular groove formed between the walls at said corrugation rib; positioning an annular body expandable when energy is supplied to it, in said annular groove of one of said tubes; putting the tube ends together to form a closed annular space with said body enclosed therein, such that one portion of the annular body is proximate said outer wall of said first tube, and another portion of the annular body is proximate said inner wall of said second tube; and heating said body to expand the body and to fuse the body to the first and second tubes.

In publication EP 1 201 403 A2 is disclosed an electrofusible unit having a length of elastomeric material provided with a winding of electrically conductive wire to serve as a heating core and a plastics pipe spigot and socket connection comprising the electrofusion unit, which is cut to length, located in a recess in the inner wall of a pipe socket and compressed by a pipe end inserted into the socket.

In publication US 2 977 994 A is disclosed a method for sealing a leak in a pipe which comprises advancing into the pipe to the location of the leak a flexible, resilient, deformable sealing member having applied to its outer surface a sealing material, which sealing member normally assumes a ring shape conforming to the interior wall of the pipe, but which as it is advanced into the pipe is inwardly deformed from its normal ring shape to provide clearance permitting the member readily to be moved to the desired position, releasing said sealing member from its deformed condition and allowing the same to return to its normal ring shape whereby the sealing material on its outer surface is urged against the interior of the pipe covering said leak.

The aim of the invention is thus to provide a new device for connecting plastic pipes - briefly a welding ring - which can be fastened to the fitting of a plastic pipe in an easier and faster way, whereby damage of the welding ring should be eliminated.

This aim is achieved by the features of claim 1, particularly the features of the characterizing part.

The substantial advantage of the welding ring according to the invention lies in that it can be very easily inserted unilaterally in the bead of the fitting of the plastic pipe, whereby the welding ring can be fully anchored in the bead by pressing the inwards extending loop of the welding ring very quickly outwards. At the same time, the connecting wires can also be easily run neatly and in parallel out of the fitting.

In the invention, the welding ring is provided with a device for fastening the loop. In this way, the position of the inwards extending loop is advantageously prevented from being changed before the installation in the fitting of a plastic pipe.

To this end, the loop can be secured by a cable tie, a wire or a corresponding fastening device.

In an advantageous embodiment of the invention, the loop is arranged opposite to the connecting areas equipped with connecting wires and formed by abutting ends of the welding ring fastened to each other, wherein advantageously when forming the loop, the connecting area of the welding ring is not subjected to any forces which could damage the electrical contact.

Advantageously, the connecting wires can also be arranged outside of the connecting area, wherein a device for making an electrical contact between the opposite ends of the resistance wires is arranged in the area of the ends of the welding ring. This has the advantageous effect that the risk of damaging the connecting wires is further reduced.

Preferably, in connection with the latter embodiment, the connecting wires could be arranged preferably at an angle of 90° with respect to the connecting area.

Further, the invention relates to a method for the arrangement of a welding ring in a groove of a plastic pipe.

On the basis of the above-mentioned state of the art as well as the above-mentioned aim, the solution lies in the following method steps:
- the welding ring is pressed inwards in order to form a loop and is equipped with a device for fastening the loop;
- the welding ring with the area opposite to the loop is then inserted in the groove of the pipe;
- the device for fastening the loop is then cut off and
- the loop area is also pressed into the groove.

The method according to the invention defined in claim 6 has the substantial advantage that the welding ring can be inserted in a bead of the fitting of a plastic pipe in a very simple and fast way without the risk of affecting the welding ring in its function.

In the method according to the invention, the welding ring is equipped with a device for fastening the loop. This ensures that the position of the inwards extending loop will not be changed before the installation.

Further advantages of the present invention will be disclosed in the following description of an example embodiment. In the drawings,
- Fig. 1: shows a side view of a device for connecting plastic pipes, briefly a welding ring,
- Fig. 2: shows a side view of a welding ring according to Fig. 1 with a loop,
- Fig. 3: shows a side view of a welding ring according to Fig. 1 with a maximum loop, and
- Figs. 4 to 7: show front views of a plastic pipe, illustrating different steps of installing a welding ring.

The drawings show a device for connecting plastic pipes, hereinafter called a welding ring, generally designated by the reference numeral 10.

The welding ring 10 consists, in a way not shown, of an inner extension hose having a cavity, a resistance wire 11 being preferably wound spirally around the extension hose and being encased in a plastic sheath 12. The plastic sheath 12 consists of a material that corresponds to the plastic material of the pipes to be connected. As weldable raw materials, polyethylene (PE), polyvinyl chloride (PVC) and polypropylene (PP) are often used.

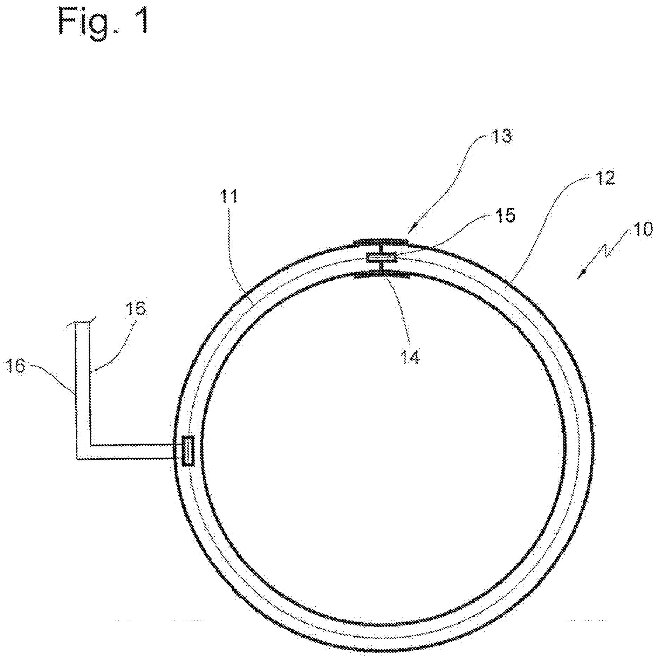

Figure 1 shows a so-called slotted welding ring 10 with a slot 13. In the slot area, the plastic sheath 12 comprises a joint cover 14, also consisting of plastic, by which the actually slotted welding ring 10 is converted into a closed welding ring 10. In addition, both ends of the resistance wire 11 are electrically connected by a ferrule 15 arranged in the area of the slot 13. Finally, the welding ring 10 is provided with connecting wires 16 arranged at an angle of 90° with respect to the slot 13.

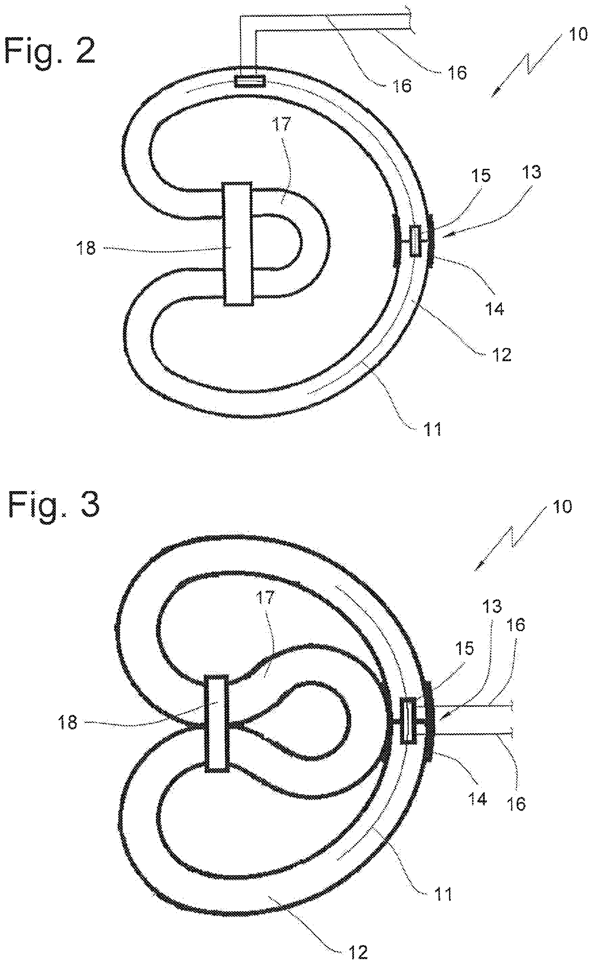

Figure 2 shows a welding ring according to Fig. 1, having an inwards extending loop 17 provided opposite to the slot 13, the position of the loop being secured by a cable tie18.

In addition, Fig. 3 shows a welding ring 10 with connecting wires 16 which come out of the welding ring 10 in the area of the slot 13. Moreover, in the area opposite to the slot 13, this welding ring 10 is provided with a maximally formed loop 17 which is also secured with a cable tie 18. Because the loop 17 has been formed clearly larger, the remaining diameter of the welding ring 10 with the loop according to Fig. 3 is smaller than in Fig. 2.

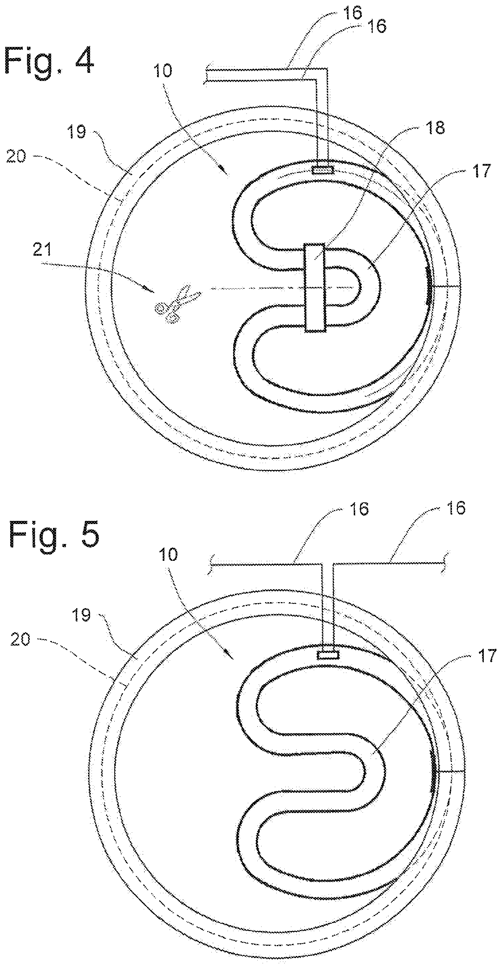

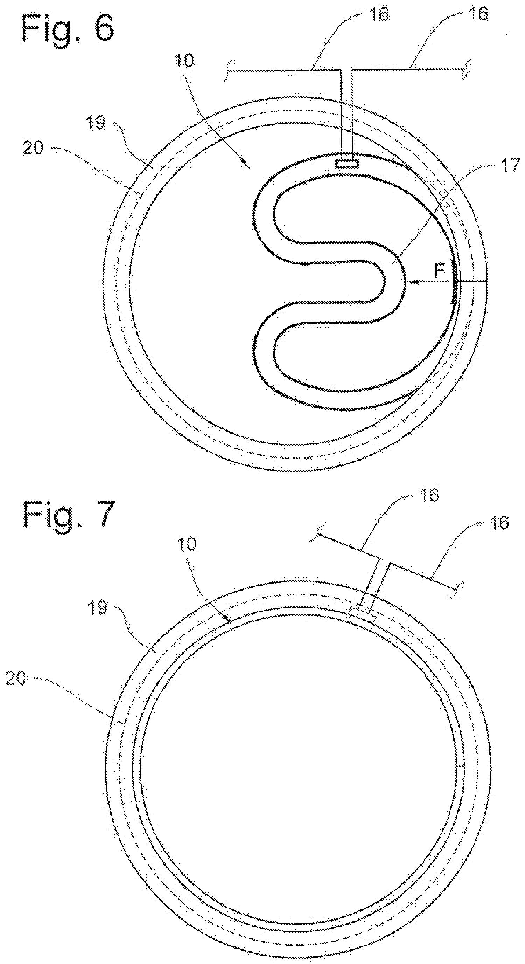

Figures 4 to 7 show the process of installing a welding ring 10 in a fitting 19 of a plastic pipe. Figure 4 shows the fitting 19 and also, with broken lines, the inner circumferential surface of a bead 20.

Figure 4 shows a welding ring 10 according to Fig. 2 having an inner loop 17 and being secured by a cable tie 18 partly inserted in the bead 20. Scissors 21, as indicated, are used to cut the cable tie 18, whereby - as shown in Figs. 5 to 7 - the loop 17 is released and can be thrown by a small force F away from the slot 13 so that the whole welding ring 10 is incorporated in the bead 20.

### List of references

- 10: welding ring
- 11: resistance wire
- 12: plastic sheath
- 13: slot
- 14: joint cover
- 15: ferrule
- 16: connecting wires
- 17: loop
- 18: cable tie
- 19: fitting
- 20: bead
- 21: scissors

- F: force

## Claims

1. A device for connecting plastic pipes, consisting substantially of a welding ring (10) comprising an inner expansion hose equipped with a cavity, a resistance wire (11) being preferably wound spirally around the expansion hose and being, in turn, encased by a plastic sheath (12), which - after melting - provides a firmly bonded joint of the abutting plastic pipes, **characterized in that** the welding ring (10) comprises at least one inwardly extending loop (17) before the installation and that the welding ring (10) is equipped with a device (18) for fastening the loop (17).

2. The device according to claim 1, **characterized in that** the loop (17) is secured with a cable tie, a wire or a similar fastening device (18).

3. The device according to claim 1, **characterized in that** the loop (17) is arranged opposite to the connecting area equipped with connecting wires (16) and formed by abutting ends of the welding ring fastened to each other.

4. The device according to claim 3, **characterized in that** the connecting wires (16) are arranged outside the connecting area, and that a device for making an electrical contact between the opposite ends of the resistance wires (11) is arranged in the area of the ends of the welding ring.

5. The device according to claim 4, **characterized in that** the connecting wires (16) are preferably arranged at an angle of 90° with respect to the connecting area.

6. A method for arranging a welding ring (10) of a device according to any of claims 1 - 5 in a groove of a plastic pipe, comprising the following steps:
- the welding ring (10) is pressed inwards in order to form a loop (17) and is equipped with a device (18) for fastening the loop (17),
- in the area opposite to the loop (17), the welding ring (10) is then inserted in the groove of the pipe,
- the device (18) for fastening the loop (17) is cut off,
- the loop area is also pressed into the groove.

## Patentansprüche

1. Vorrichtung zum Verbinden von Kunststoffrohren, im Wesentlichen bestehend aus einem Schweißring (10), der einen inneren, mit einem Hohlraum versehenen Dehnschlauch umfasst, wobei ein Widerstandsdraht (11) vorzugsweise wie eine räumliche Spirale um den Dehnschlauch gewickelt und selbst wiederum mit einer Kunststoffumhüllung (12) ummantelt ist, die - nach dem Schmelzen - eine feste stoffschlüssige Verbindung der aneinanderstoßenden Kunststoffrohre bereitstellt, **dadurch gekennzeichnet, dass** der Schweißring (10) vor dem Einbau mindestens eine sich nach innen erstreckende Schlaufe (17) umfasst und dass der Schweißring (10) mit einer Einrichtung (18) zur Festlegung der Schlaufe (17) versehen ist.

2. Vorrichtung nach Anspruch 1, **dadurch gekennzeichnet, dass** die Schlaufe (17) mit einem Kabelbinder, einem Draht oder einer ähnlich ausgebildeten Einrichtung (18) zur Festlegung gesichert ist.

3. Vorrichtung nach Anspruch 1, **dadurch gekennzeichnet, dass** die Schlaufe (17) gegenüberliegend zu dem mit Anschlussdrähten (16) versehenen Verbindungsbereich angeordnet ist und durch aneinanderstoßende, aneinander befestigte Enden des Schweißrings gebildet wird.

4. Vorrichtung nach Anspruch 3, **dadurch gekennzeichnet, dass** die Anschlussdrähte (16) außerhalb des Verbindungsbereichs angeordnet sind und dass eine Einrichtung zum Herstellen eines elektrischen Kontaktes zwischen den gegenüberliegenden Enden der Widerstandsdrähte (11) im Bereich der Enden des Schweißrings angeordnet ist.

5. Vorrichtung nach Anspruch 4, **dadurch gekennzeichnet, dass** die Anschlussdrähte (16) in Bezug auf den Verbindungsbereich vorzugsweise in einem Winkel von 90° angeordnet sind.

6. Verfahren zum Anordnen eines Schweißrings (10) einer Vorrichtung nach einem der Ansprüche 1 - 5 in einer Nut eines Kunststoffrohres, das die folgenden Verfahrensschritte umfasst:
- der Schweißring (10) wird nach innen gedrückt, um eine Schlaufe (17) zu bilden und wird mit einer Einrichtung (18) zur Festlegung der Schlaufe (17) versehen,
- in dem der Schlaufe (17) gegenüberliegenden Bereich wird dann der Schweißring (10) in die Nut des Rohres eingeführt,
- die Einrichtung (18) zur Festlegung der Schlaufe (17) wird durchgeschnitten,
- der Schlaufenbereich wird ebenfalls in die Nut gedrückt.

## Revendications

1. Dispositif permettant de raccorder des tuyaux en plastique, constitué essentiellement d'un anneau de soudage (10) comprenant un tuyau d'expansion interne équipé d'une cavité, un fil de résistance (11) étant de préférence enroulé en spirale autour du tuyau d'expansion et étant, à son tour, encastré dans une gaine plastique (12), qui - après fusion - fournit un joint, collé fermement, des tuyaux en plastique de butée, **caractérisé en ce que** l'anneau de soudage (10) comprend au moins une boucle s'étendant vers l'intérieur (17) avant l'installation et **en ce que** l'anneau de soudage (10) est équipé d'un dispositif (18) permettant de fixer la boucle (17).

2. Dispositif selon la revendication 1, **caractérisé en ce que** la boucle (17) est fixée avec un serre-câble, un fil ou un dispositif de fixation similaire (18).

3. Dispositif selon la revendication 1, **caractérisé en ce que** la boucle (17) est agencée à l'opposé de la zone de raccordement équipée de fils de raccordement (16) et formée par des extrémités de l'anneau de soudage venant en butée et fixées les unes aux autres.

4. Dispositif selon la revendication 3, **caractérisé en ce que** les fils de raccordement (16) sont agencés hors de la zone de raccordement et **en ce qu'**un dispositif permettant de faire un contact électrique entre les extrémités opposées des fils de résistance (11) est agencé dans la zone des extrémités de l'anneau de soudage.

5. Dispositif selon la revendication 4, **caractérisé en ce que** les fils de raccordement (16) sont de préférence agencés selon un angle de 90° relativement à la zone de raccordement.

6. Procédé permettant d'agencer un anneau de soudage (10) d'un dispositif selon l'une quelconque des revendications 1 à 5, dans une rainure d'un tuyau en plastique, comprenant les étapes suivantes :
- l'anneau de soudage (10) est comprimé vers l'intérieur afin de former une boucle (17) et est équipé d'un dispositif (18) permettant de fixer la boucle (17),
- dans la zone opposée à la boucle (17), l'anneau de soudage (10) est ensuite inséré dans la rainure du tuyau,
- le dispositif (18) permettant de fixer la boucle (17) est découpé,
- la zone de boucle est également comprimée dans la rainure.
